# FASCICULE DE BREVET EUROPEEN

(11) **EP 2 812 677 B1**
(45) Date de publication et mention de la délivrance du brevet: **30.11.2022**
(21) Numéro de dépôt: 12702284.6
(22) Date de dépôt: 07.02.2012
(51) Int. Cl.: G01N 21/85, G01N 21/84, G01N 21/35, G01N 21/359, G01N 21/3577

(54) **PROCEDE DE DETECTION DE LA TRANSITION DE PRODUITS DANS UNE CONDUITE**
VERFAHREN ZUM ERKENNEN DES ÜBERGANGS VON PRODUKTEN IN EINER LEITUNG
METHOD FOR DETECTING THE TRANSITION OF PRODUCTS IN A CONDUIT

(43) Date de publication de la demande: 17.12.2014
(73) Titulaire: Topnir Systems SAS, 13857 Aix En Provence (FR)
(72) Inventeur: LAMBERT, Didier, 33430 Bernos Beaulac (FR); RIBERO, Bernard, F-13000 Marseille (FR); SAINT-MARTIN, Claude, F-13330 Pelissanne (FR); SANCHEZ, Miguel, F-13117 Lavera (FR)
(74) Mandataire: De Kezel, Eric
(86) Numéro de dépôt international: PCT/EP2012/052041
(87) Numéro de publication internationale: WO 2012/089851

(56) Documents cités:
- EP-A2- 0 644 421
- ES-A1- 2 186 549
- FR-A1- 2 906 034
- US-A- 5 712 481
- US-A1- 2004 033 617
- US-A1- 2010 211 329

## Description

La présente invention concerne un procédé de détection de la transition, entre un premier composé et un deuxième composé, d'un produit, circulant à l'intérieur d'une conduite d'acheminement de ce produit, et susceptible de contenir un tel premier composé et/ou un tel deuxième composé.

Cette invention a, encore, trait à un dispositif de de détection de la transition d'un produit mettant en œuvre le dit procédé.

Cette invention trouvera une application toute particulière lorsqu'il s'agit de détecter, à l'intérieur d'une telle conduite d'acheminement, une transition entre un produit constitué par un premier composé et un produit constitué par un deuxième composé.

On connaît, d'ores et déjà, des procédés permettant de caractériser un tel produit et consistant, de manière espacée dans le temps, à prélever, à l'intérieur d'une telle conduite d'acheminement, une quantité déterminée de produit pour en assurer l'analyse à l'extérieur de cette conduite.

La mise en œuvre d'un tel procédé nécessite, par conséquent, un aménagement particulier de cette conduite permettant un tel prélèvement (tuyau de dérivation, vannes, ouverture...), d'accéder au produit prélevé ou à prélever et/ou de pouvoir récupérer ce produit prélevé en vue de son analyse ce qui, en fonction de l'implantation et/ou de l'environnement d'une telle conduite, peut s'avérer problématique.

De plus, entre le moment où un prélèvement de produit est effectué et le moment où ce produit est analysé, il s'écoule un laps de temps pendant lequel une transition a pu débuter, voire s'est achevée, ceci sans qu'elle ait pu être détectée. Il en résulte une incertitude sur le moment exact de cette transition de sorte que, pour éviter de charger ou expédier un produit contenant un composé inapproprié, on retire une quantité importante de produit que l'on pense être dévalorisé car susceptible de contenir un tel composé inapproprié.

Un autre inconvénient consiste en ce que la caractérisation d'un tel produit s'opère, usuellement, sur la base d'au moins une propriété physique d'un tel produit. Ce produit est, alors, caractérisé par une grandeur physique correspondant à une telle propriété physique. On observera qu'un tel type de caractérisation basé sur une propriété physique, d'une part, ne permet pas toujours de discriminer de manière suffisante un premier composé par rapport à un deuxième composé, a fortiori par rapport à un mélange de ces premier et deuxième composés, ce qui empêche alors une telle caractérisation basée sur une telle propriété physique et, d'autre part, manque généralement de précision ce qui empêche une caractérisation précise de ce produit et, par exemple, ne permet pas de déterminer une transition de manière précise.

Le document US 2010/211329 A1 (« FARQUHARSON STUART [US] ET AL ») concerne un procédé et un appareil qui sont utilisés pour déterminer la classe, le grade et les propriétés des échantillons de carburant, indépendamment de la température ambiante, de l'instrument ou de l'échantillon, en utilisant des corrélations mathématiques entre la classe, le grade et les propriétés du carburant et leurs spectres développés à partir d'une base de données d'échantillons avec des propriétés mesurées et des spectres. La capacité de mesurer un échantillon de carburant en utilisant ce procédé et cet appareil est utile pour identifier des échantillons de carburant inconnus, déterminer la pertinence de l'équipement, et surveiller et contrôler les processus de carburant, tels que les opérations de mélange, la distillation et la synthèse.

Le document US 2004/033617 A1 (« SONBUL YASER R [SA] ») concerne une modélisation par analyse topologique en proche infrarouge de produits de raffinage du pétrole, et plus particulièrement une méthode pour analyser une substance permettant d'identifier un composant que contient cette substance.

Le document FR 2906034 A1 (« TOPNIR SYSTEMS SOC PAR ACTIONS [FR] ») décrit un procédé pour l'estimation d'une propriété d'un échantillon. Ce procédé consiste à mesurer la densité optique d'un échantillon pour différentes longueurs d'onde en proche infrarouge, à déterminer un quotient spectral à partir de cette densité optique, à calculer un quotient spectral étendu à partir de ce quotient spectral, à comparer ce quotient spectral étendu avec un quotient spectral étendu d'un produit chimique connu pour, finalement et en fonction du résultat de cette comparaison, déterminer une propriété de l'échantillon.

Le document US 5712481 (A) (« WELCH WILLIAM T et al. de la société ASHLAND INC [US] ») décrit un procédé d'analyse d'un mélange d'hydrocarbures liquides comprenant une espèce chimique pour déterminer la concentration d'espèces qui utilise une analyse de type proche-infrarouge et un signal indicatif correspondant de la concentration d'espèces dans le mélange, sur la base desdites absorbances ou de leurs fonctions.

La présente invention se veut de remédier aux inconvénients des procédés de l'état de la technique.

A cet effet, l'invention concerne un procédé selon la revendication 1 de détection de la transition, entre un premier composé et un deuxième composé, d'un produit, susceptible de contenir un tel premier composé et/ou un tel deuxième composé, et circulant à l'intérieur d'une conduite d'acheminement de ce produit.

L'invention concerne également un dispositif selon la revendication 10 de détection de la transition, entre un premier composé et un deuxième composé, d'un produit circulant à l'intérieur d'une conduite d'acheminement de ce produit, et susceptible de contenir un tel premier composé et/ou un tel deuxième composé, ce dispositif étant conçu pour mettre en œuvre le procédé décrit ci-dessus.

Le procédé conforme à l'invention consiste, en particulier, à relever au moins un spectre d'absorbances d'un produit, ceci directement à l'intérieur d'une conduite d'acheminement.

De manière avantageuse, le relevé d'un tel spectre est, alors, réalisé in situ et reflète, au moment d'un tel relevé, les caractéristiques exactes du produit pour lequel on relève un tel spectre.

Selon un autre avantage, la caractérisation d'un produit, consistant en une détection de la transition de produit selon la présente invention, ne nécessite, donc, plus le prélèvement, dans des conditions parfois difficiles, d'une certaine quantité de produit à l'intérieur d'une conduite. Le nouveau procédé permet, par conséquent, de faciliter une telle caractérisation et présente, en outre, l'avantage d'être non destructif.

De manière avantageuse, outre un orifice pour l'introduction d'une sonde d'un spectromètre à l'intérieur de la conduite d'acheminement, la mise en œuvre de ce nouveau procédé ne nécessite aucun aménagement particulier d'une telle conduite d'acheminement ou de l'installation comportant une telle conduite.

De plus, ce nouveau procédé peut être mis en œuvre en un endroit quelconque de la conduite d'acheminement du produit, ceci indépendamment des contraintes d'environnement ou d'accessibilité à une telle conduite antérieurement imposées par la nécessité de prélever du produit conformément aux procédés de l'état de la technique. En particulier, le relevé des spectres peut, alors, être réalisé suffisamment en amont de l'extrémité de la conduite d'acheminement ce qui permet, alors, d'intervenir au niveau de cette extrémité, notamment pour modifier la direction d'acheminement du produit, suffisamment à temps malgré la vitesse d'écoulement du produit à l'intérieur de cette conduite.

En outre, ce nouveau procédé consiste à relever au moins un spectre et à traiter un tel spectre instantanément ce qui permet, avantageusement, de caractériser un produit en temps réel et, ainsi, d'intervenir immédiatement sur l'acheminement du produit, plus particulièrement sur la direction d'acheminement de ce produit. Ceci permet, avantageusement, de maximiser la quantité de produit non dévalorisée durant une transition de ce produit.

Un autre avantage consiste en ce que, à partir des spectres relevés pour des composés purs, on détermine au moins un marqueur spectral qui est constitué par une fonction d'une pluralité d'absorbances pertinentes des spectres d'un tel composé pur. Un tel marqueur spectral permet, alors avantageusement, de caractériser les premier et deuxième composés ainsi que le produit qu'il convient de caractériser, ceci, d'une part, de manière optimale et avec une précision accrue et, d'autre part, sans recourir à une caractérisation basée uniquement sur des propriétés physiques relatives aux composés comme dans l'état de la technique.

Encore un autre avantage consiste en ce que ce procédé est susceptible d'être mis en œuvre pour tout type de produit en mouvement à l'intérieur d'une conduite d'acheminement.

De manière avantageuse, ce procédé est susceptible d'être mis en œuvre pour tout type de conduite d'acheminement, notamment pour une ligne d'alimentation (plus particulièrement un pipe line d'alimentation d'un site industriel), de transfert (plus particulièrement un pipe line de transfert de pétrole brut, de produit intermédiaires ou finis), de chargement ou autre.

Finalement, ce procédé est avantageusement apte à être mis en œuvre pour tous les procédés industriels nécessitant de caractériser des produits circulant dans des conduites d'acheminement et trouvera une application particulièrement appropriée (mais non limitative) dans des raffineries, dans des unités de production (distillation, conversion...), dans des mélangeuses (plus particulièrement de carburant, de lubrifiant, peinture) ou autres.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant au dessin joint en annexe et dans lequel :

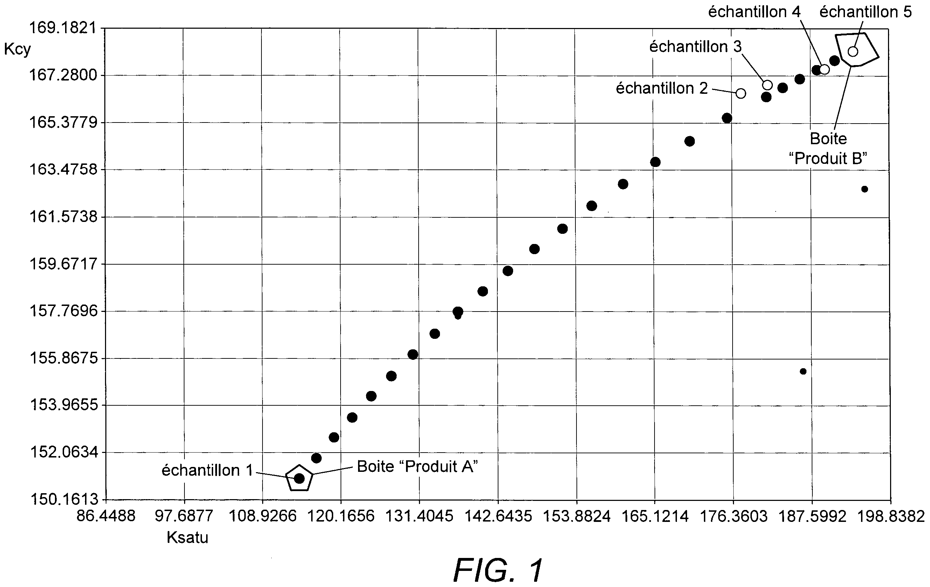

- la figure 1 est une vue représentation graphique de la caractérisation d'un produit consistant à détecter la transition d'un produit entre un premier composé et un deuxième composé.

On observera que selon l'invention, le procédé consiste en ce que :
- à partir des spectres d'absorbances relevés pour les échantillons des premier et deuxième composés purs, on détermine au moins trois marqueurs spectraux, communs au premier composé et au deuxième composé, discriminants pour ces premier et deuxième composés, et constitués chacun par une fonction d'une pluralité d'absorbances d'un tel spectre ;
- à partir des spectres d'absorbances relevés pour les échantillons des premier et deuxième composés purs, on définit, d'une part, une première boîte spectrale constituée par une première zone spectrale délimitée par des valeurs de ces marqueurs spectraux déterminés et correspondant au premier composé pur et, d'autre part, une deuxième boîte spectrale constituée par une deuxième zone spectrale délimitée par des valeurs de ces marqueurs spectraux déterminés et correspondant au deuxième composé pur, ceci au moins pour les trois marqueurs spectraux préalablement déterminés et dans un espace correspondant à ces marqueurs spectraux ;
- on caractérise ledit produit en fonction, d'une part, des première et deuxième boîtes spectrales et, d'autre part, de la valeur d'au moins un marqueur spectral déterminé (de préférence de la valeur d'au moins les trois marqueurs spectraux déterminés) et correspondant à au moins un spectre d'absorbances relevé pour le produit.

Ainsi et tel que mentionné ci-dessus, le procédé consiste à relever des spectres d'absorbances pour des échantillons du premier composé pur ainsi que pour des échantillons du deuxième composé pur. De manière additionnelle, le procédé peut, encore, consister à relever des spectres d'absorbances pour des compositions chimiques proches de ces premier et deuxième composés. De telles compositions chimiques peuvent être constituées par des mélanges synthétiques contenant, selon le cas, le premier composé ou le deuxième composé, ainsi qu'un autre produit plus lourd ou plus léger.

Le procédé consiste, également, à relever au moins un spectre d'absorbances du produit à caractériser.

En fait, les relevés de ces spectres d'absorbances (pour les premier et deuxième composés, pour les compositions chimiques proches ainsi que pour le produit à caractériser) sont réalisés à l'aide d'un spectromètre.

De manière non limitative, un tel spectromètre peut être conçu pour réaliser une spectroscopie Raman, en RMN, dans le domaine de l'infrarouge, de l'UV-visible ou, et de préférence, du proche infrarouge (NIR).

Un tel spectromètre comporte une sonde (notamment de type fibré) qui, au moins pour le relevé d'un spectre du produit à caractériser, est introduite à l'intérieur de la conduite d'acheminent dans laquelle circule ce produit.

Selon une autre caractéristique de ce procédé, après avoir relevé un tel spectre d'absorbances, celui-ci est enregistré dans une base de données, plus particulièrement sous forme numérisée et/ou digitalisée.

En fait, un tel spectre peut être enregistré dans cette base de données sous forme brute et/ou après avoir subi un traitement mathématique.

Tel que mentionné ci-dessus, le procédé de caractérisation, consistant en une détection de la transition de produit selon la présente invention, consiste à déterminer au moins un marqueur spectral.

A ce propos, on observera que, lorsqu'on détermine un tel marqueur spectral :
- on identifie une pluralité d'absorbances pertinentes qui permettent de caractériser (de préférence de manière optimale) les premier et deuxième composés purs, ceci à partir des spectres d'absorbances relevés pour chaque échantillon d'une pluralité d'échantillons du premier composé pur ainsi que pour chaque échantillon d'une pluralité d'échantillons du deuxième composé pur ;
- on bâtit au moins un marqueur spectral à partir d'une pluralité d'absorbances pertinentes identifiées ;
- on valide au moins un tel marqueur spectral bâti.

De manière plus précise, lorsqu'on identifie une pluralité d'absorbances pertinentes, on procède, en fait, à une analyse statistique des spectres relevés pour chaque échantillon d'une pluralité d'échantillons du premier composé pur ainsi que pour chaque échantillon d'une pluralité d'échantillons du deuxième composé pur.

Selon un mode de réalisation de l'invention, on procède à l'analyse statistique des spectres d'absorbances en effectuant, soit une analyse factorielle discriminante, soit une analyse en composantes principales de ces spectres d'absorbances.

L'identification de ces absorbances pertinentes permet, alors, de bâtir au moins un marqueur spectral, ceci en construisant une fonction d'une pluralité de ces absorbances pertinentes.

A ce propos, on observera qu'une telle fonction d'une pluralité d'absorbances peut être constituée par un ratio d'absorbances, par une combinaison (notamment linéaire) d'absorbances (notamment normalisées), par un ratio de combinaison (notamment linéaire) d'absorbances (notamment normalisées) ou autre.

Finalement, lorsqu'on détermine un marqueur spectral, on assure encore une validation d'un tel marqueur spectral préalablement bâti.

En fait, lorsqu'on valide un tel marqueur spectral, on détermine si les premier et deuxième composés sont discriminés pour au moins un tel marqueur spectral, plus particulièrement pour les gammes de valeurs d'un tel marqueur spectral, dans le plan de deux marqueurs spectraux ou dans l'espace d'au moins trois marqueurs spectraux.

Tel que mentionné ci-dessus, le procédé consiste en ce que :
- à l'intérieur de la conduite d'acheminement du produit, on procède au relevé d'au moins un spectre d'absorbances de ce produit circulant à l'intérieur de cette conduite ;
- pour au moins un tel spectre d'absorbances relevé pour le produit circulant à l'intérieur de la conduite, on détermine la valeur d'au moins un marqueur spectral correspondant à au moins un marqueur spectral préalablement déterminé pour les premier et deuxième composés purs.

Cependant et selon un mode de réalisation préféré de l'invention, ce procédé consiste en ce que :
- à l'intérieur de la conduite d'acheminement du produit, on procède à une succession de relevés d'un spectre d'absorbances de ce produit circulant à l'intérieur de cette conduite ;
- pour chacun des spectres d'absorbances relevés pour le produit circulant à l'intérieur de la conduite, on détermine la valeur d'au moins un marqueur spectral correspondant à au moins un marqueur spectral préalablement déterminé pour les premier et deuxième composés purs.

Ce procédé consiste, alors, en ce qu'on caractérise ledit produit en fonction, d'une part, des première et deuxième boîtes spectrales et, d'autre part, des valeurs d'au moins un marqueur spectral déterminé et correspondant aux spectres d'absorbances relevés pour le produit.

Selon une autre caractéristique, ce procédé de caractérisation d'un tel produit, consistant en une détection de la transition de produit selon la présente invention, consiste, encore, en ce qu'on relève les spectres correspondant à ce produit avec une fréquence déterminée. Cette fréquence déterminée est, de préférence, comprise entre 1 seconde et quelques secondes (notamment 10 à 15 secondes).

Une caractéristique additionnelle de ce procédé consiste en ce que cette fréquence est ajustable, notamment en fonction des caractéristiques du produit (plus particulièrement de la viscosité de ce produit) et/ou de la vitesse de circulation du produit dans la conduite d'acheminement.

Finalement, le procédé selon l'invention peut, encore, consister en ce qu'on modifie la fréquence avec laquelle on relève les spectres du produit, ceci lorsque, au cours de la caractérisation du produit par ce procédé, on détecte une évolution des caractéristiques de ce produit.

L'invention concerne un procédé de détection de la transition, entre un premier composé et un deuxième composé, d'un produit, susceptible de contenir un tel premier composé et/ou un tel deuxième composé, et circulant à l'intérieur d'une conduite d'acheminement de ce produit.

Selon la présente invention, la caractérisation de ce produit consiste à détecter une telle transition de ce produit.

Selon un premier mode de réalisation, un tel procédé de détection de transition consiste en ce que :
- sur un graphique, on représente les boites spectrales correspondant à au moins un marqueur spectral, ceci pour les premier et deuxième composés purs ;
- sur ce même graphique, on visualise la valeur du ou des marqueurs spectraux déterminés et correspondant à au moins spectre d'absorbances relevé (voire correspondant à chaque spectre d'une succession de spectres relevés) pour le produit circulant à l'intérieur de la conduite d'acheminement ;
- on détecte, pour le produit, une transition entre le premier composé et le deuxième composé lorsqu'on observe que la valeur du ou des marqueurs spectraux déterminés et correspondant à ce produit s'éloigne de la première boîte spectrale et/ou s'approche de la deuxième boîte spectrale, voire correspond à cette deuxième gamme de valeurs.

Il a été illustré figure 1, un mode préféré de réalisation de l'invention consistant à représenter sur un graphique les boîtes spectrales (boîte « produit A » ; boîte « produit B ») correspondant, d'une part, à deux marqueurs spectraux (Kcy ; Ksatu) et, d'autre part, aux premier et deuxième composés purs, ceci dans un plan correspondant au plan de ces deux marqueurs spectraux (Kcy ; Ksatu).

Sur ce même graphique (figure 1) ont, également, été visualisées, là encore dans le même plan de ces deux marqueurs spectraux (Kcy ; Ksatu), les valeurs de ces marqueurs spectraux (Kcy ; Ksatu) correspondant au produit, ceci pour une pluralité de relevés successifs de spectres d'absorbances de ce produit (sample 1 à sample 5).

En fait, le procédé consiste, plus particulièrement, à assurer la visualisation des valeurs de ces marqueurs spectraux (Kcy ; Ksatu), ceci en temps réel.

A ce propos, on observera qu'un tel graphique est, plus particulièrement, visualisé sur un écran que comporte un dispositif pour la mise en œuvre du procédé de caractérisation.

Selon un deuxième mode de réalisation de l'invention, un tel procédé de détection consiste en ce qu'on détecte, pour le produit, l'achèvement d'une transition entre le premier composé et le deuxième composé lorsque, après que la valeur du ou des marqueurs spectraux correspondant à des spectres d'absorbances relevés pour un produit circulant dans une conduite d'acheminement ait évolué entre la première et la deuxième boîte spectrale, la différence entre les valeurs du ou des marqueurs spectraux correspondant à au moins deux spectres d'absorbances successifs relevés pour ce produit est inférieure ou égal à une consigne déterminée.

En fait, une telle consigne déterminée correspond, plus particulièrement, à la répétabilité du dispositif pour mettre en œuvre le procédé de caractérisation.

Tel que mentionné ci-dessus, le procédé de caractérisation (et, par conséquent, le procédé de détection de la transition) d'un tel produit consiste, encore, en ce qu'on relève les spectres correspondant à ce produit avec une fréquence déterminée.

A ce propos, on observera que, au début de la mise en oeuvre de ce procédé, le procédé permet de détecter un produit contenant un premier composé. Lorsque le deuxième composé arrive dans la conduite d'acheminement, le procédé permet de détecter une transition de ce produit entre le premier composé et le deuxième composé. Lors d'une telle transition, les spectres varient à chaque relevé, ceci en fonction de la dilution du deuxième composé dans le premier composé et inversement. Ce procédé permet, alors, également, de détecter l'achèvement d'une telle transition (le produit dans la conduite d'acheminement est alors constitué par le deuxième composé pur) lorsque, tel que mentionné ci-dessus, la différence entre les valeurs du ou des marqueurs spectraux correspondant à au moins deux spectres d'absorbances successifs relevés pour ce produit est inférieure ou égal à une consigne déterminée.

Connaissant la fréquence de relevé des spectres, il est, alors, possible de déterminer le moment précis (instant t) de l'achèvement de la transition, c'est-à-dire le moment précis où le deuxième composé a remplacé le premier composé et où la conduite d'acheminement ne contient plus que le deuxième composé pur.

Ce procédé permet, alors, de valider la composition du produit et, ainsi, de prendre les mesures nécessaires pour le devenir ultérieur de ce produit (par exemple valider son chargement, son transport ou autre).

Ainsi, ce procédé permet, également, de maximiser la quantité de produit non dévalorisée durant une telle transition.

Tel que revendiqué, l'invention concerne un procédé de caractérisation d'un produit, circulant à l'intérieur d'une conduite d'acheminement de ce produit, et susceptible de contenir un tel premier composé et/ou un tel deuxième composé.

Le procédé de caractérisation de produit, non couvert par les revendications, concerne, alors, également, un procédé de détermination de la composition d'un produit, circulant à l'intérieur d'une conduite d'acheminement de ce produit, et susceptible de contenir un premier composé et/ou un deuxième composé.

A ce propos, on observera que ce procédé de détermination de la composition d'un produit consiste, plus particulièrement, en ce qu'on détermine cette composition en mettant en œuvre le procédé de caractérisation décrit ci-dessus.

En fait et dans un pareil cas, la caractérisation de ce produit consiste, plus particulièrement, à déterminer la composition de ce produit.

Ce procédé de détermination de la composition consiste, en particulier, en ce qu'on détermine la composition du produit en calculant le taux (plus particulièrement le pourcentage, notamment en volume) du premier composé et/ou du deuxième composé à l'intérieur de ce produit, ceci à partir, d'une part, des première et deuxième boîtes spectrales d'au moins un marqueur spectral et, d'autre part, de la valeur d'au moins un tel marqueur spectral du produit et correspondant au spectre d'absorbances relevé pour le produit.

Ce procédé permet, en particulier, de déterminer la composition d'un produit constitué par un mélange des premier et deuxième composés, ceci avec une grande précision.

Ce procédé permet, également, de suivre l'évolution de ce mélange dans le temps.

Finalement, ce procédé de détermination de la composition d'un produit permet, avantageusement, de vérifier et de suivre la transition de ce produit entre un premier composé et un deuxième composé, ceci lors de la circulation de ce produit dans une conduite d'acheminement.

Tel que mentionné ci-dessus, la présente invention concerne un procédé de caractérisation d'un produit, circulant à l'intérieur d'une conduite d'acheminement de ce produit, et susceptible de contenir un premier composé et/ou un deuxième composé, la dite caractérisation consistant en une détection de la transition de produit selon la présente invention.

La présente invention concerne un dispositif de caractérisation d'un produit consistant en une détection de la transition de produit, circulant à l'intérieur d'une conduite d'acheminement de ce produit, et susceptible de contenir un premier composé et/ou un deuxième composé.

Ce dispositif est, plus particulièrement, conçu pour mettre en œuvre le procédé de détection de transition décrit ci-dessus.

Ce dispositif comporte, alors, une base de données contenant au moins les spectres d'absorbances d'une pluralité d'échantillons du premier composé pur et d'une pluralité d'échantillons du deuxième composé pur.

De manière additionnelle, cette base de données peut, encore, comporter des spectres d'absorbances de compositions chimiques proches de ces premier et deuxième composés. De telles compositions chimiques peuvent être constituées par des mélanges synthétiques contenant, selon le cas, le premier composé ou le deuxième composé, ainsi qu'un autre produit plus lourd ou plus léger

En fait, cette base de données peut comporter de tels spectres d'absorbances, plus particulièrement sous forme numérisée et/ou digitalisée, enregistrés dans cette base de données.

A ce propos, on observera qu'un tel spectre peut être enregistré dans cette base de données sous forme brute et/ou après avoir subi un traitement mathématique.

De manière additionnelle, une telle base de données peut, encore, comporter des informations relatives aux propriétés physiques et/ou chimiques de ces premier et deuxième composés.

En fait, une telle base de données est incorporée dans un ordinateur (plus particulièrement dans une mémoire que comporte un tel ordinateur) que comporte le dispositif de détection de transition selon l'invention.

Le dispositif de détection de transition comporte, encore, des moyens pour déterminer au moins un marqueur spectral, commun au premier composé et au deuxième composé, discriminant pour ces premier et deuxième composés, et constitué par une fonction d'une pluralité d'absorbances d'un tel spectre.

De tels moyens pour déterminer au moins un marqueur spectral comportent des moyens pour identifier une pluralité d'absorbances pertinentes qui permettent de caractériser (de préférence de manière optimale) les premier et deuxième composés purs, ceci à partir des spectres d'absorbances relevés pour chaque échantillon d'une pluralité d'échantillons du premier composé pur ainsi que pour chaque échantillon d'une pluralité d'échantillons du deuxième composé pur.

En fait, de tels moyens d'identification sont constitués par des moyens d'analyse statistique des spectres relevés pour chaque échantillon d'une pluralité d'échantillons du premier composé pur ainsi que pour chaque échantillon d'une pluralité d'échantillons du deuxième composé pur.

De tels moyens d'analyse statistique des spectres d'absorbances sont conçus pour effectuer, soit une analyse factorielle discriminante, soit une analyse en composantes principales de ces spectres d'absorbances.

De tels moyens pour déterminer au moins un marqueur spectral comportent, encore, des moyens pour bâtir au moins un marqueur spectral à partir d'une pluralité d'absorbances pertinentes identifiées.

Ces moyens pour bâtir sont conçus pour construire au moins un marqueur spectral constitué par une fonction d'une pluralité de ces absorbances pertinentes identifiées. Une telle fonction peut être constituée par un ratio d'absorbances, par une combinaison (notamment linéaire) d'absorbances (notamment normalisées), par un ratio de combinaison (notamment linéaire) d'absorbances (notamment normalisées) ou autre.

De tels moyens pour déterminer au moins un marqueur spectral comportent, encore, des moyens pour valider au moins un marqueur spectral préalablement bâti. De tels moyens pour valider sont conçus pour déterminer si les premier et deuxième composés sont discriminés, selon le cas, pour un tel marqueur spectral, dans le plan de deux marqueurs spectraux ou dans l'espace d'au moins trois marqueurs spectraux.

En fait, les moyens d'analyse statistique, les moyens pour bâtir au moins un marqueur spectral et les moyens pour valider au moins un tel marqueur spectral sont constitués par un logiciel implanté dans un ordinateur que comporte le dispositif de détection de transition selon l'invention.

Le dispositif de détection de transition comporte, encore, des moyens pour définir, d'une part, une première boîte spectrale constituée par une première zone spectrale délimitée par des valeurs d'au moins un tel marqueur spectral déterminé et correspondant au premier composé pur et, d'autre part, une deuxième boîte spectrale constituée par une deuxième zone spectrale délimitée par des valeurs d'au moins un tel marqueur spectral déterminé et correspondant au deuxième composé pur, ceci pour au moins un marqueur spectral préalablement déterminé.

Là encore, les moyens pour déterminer une telle boîte spectrale sont constitués par un logiciel implanté dans un ordinateur que comporte le dispositif de détection de transition selon l'invention.

Ce dispositif de détection de transition comporte, également, des moyens pour relever, à l'intérieur de la conduite d'acheminement du produit, au moins un spectre d'absorbances de ce produit circulant à l'intérieur de cette conduite, voire une succession de spectres d'absorbances de ce produit circulant à l'intérieur de cette conduite.

De tels moyens de relevé comportent un spectromètre (de type Raman, RMN, en infrarouge, en UV-visible ou, et de préférence, en proche infrarouge (NIR)), d'une part, comportant une sonde (notamment de type fibré, introduite à l'intérieur de la conduite d'acheminement) et, d'autre part, que comporte le dispositif de détection de transition de l'invention.

De plus, ce dispositif comporte des moyens pour déterminer la valeur d'au moins un marqueur spectral correspondant à au moins un marqueur spectral préalablement déterminé pour les premier et deuxième composés purs, ceci pour au moins un spectre d'absorbances relevé pour le produit circulant à l'intérieur de la conduite, voire pour chacun des spectres d'absorbances correspondant à une succession de spectres d'absorbances relevés pour ce produit circulant à l'intérieur de cette conduite.

De tels moyens sont, alors, conçus pour calculer une telle valeur, d'une part, à partir d'au moins un spectre d'absorbances (respectivement à partir de chacun des spectres d'une succession de spectres) relevés pour le produit circulant à l'intérieur de la conduite et, d'autre part, en appliquant au moins une fonction, constituant au moins un marqueur spectral, à une pluralité d'absorbances pertinentes d'un tel spectre (respectivement de chacun des spectres) et relevées pour ce produit.

Finalement, le dispositif de caractérisation consistant en une détection de la transition de produit comporte des moyens pour caractériser ledit produit, ceci en fonction, d'une part, des première et deuxième boîtes spectrales et, d'autre part, de la valeur d'au moins un marqueur spectral déterminé et correspondant à au moins un spectre d'absorbances relevé pour le produit.

L'invention concerne un dispositif de détection la transition, entre un premier composé et un deuxième composé, d'un produit, susceptible de contenir un tel premier composé et/ou un tel deuxième composé, et circulant à l'intérieur d'une conduite d'acheminement de ce produit.

Ce dispositif de détection de la transition est constitué par un dispositif de caractérisation présentant les caractéristiques décrites ci-dessus et dans lequel, selon un premier mode de réalisation, les moyens pour caractériser un produit comportent :
- un moyen pour représenter, sur un graphique, les boites spectrales correspondant à au moins un marqueur spectral, ceci pour les premier et deuxième composés purs ;
- un moyen pour visualiser, sur ce même graphique, la valeur du ou des marqueurs spectraux déterminés et correspondant à au moins un spectre d'absorbances relevé (voire à une pluralité de spectres d'absorbances relevés) pour le produit circulant à l'intérieur de la conduite d'acheminement.

Pour un tel dispositif, on détecte, pour le produit, une transition entre le premier composé et le deuxième composé lorsqu'on observe, sur ledit graphique, que la valeur du ou des marqueurs spectraux déterminés et correspondant à ce produit s'éloigne de la première boîte spectrale et/ou s'approche de la deuxième boîte spectrale, voire correspond à cette deuxième boîte spectrale.

Un tel graphique est visualisé sur un écran que comporte le dispositif de caractérisation consistant en une détection de la transition de produit selon l'invention.

Selon un deuxième mode de réalisation, les moyens pour caractériser un produit comportent :
- un moyen pour calculer la différence entre les valeurs du ou des marqueurs spectraux correspondant à au moins deux spectres d'absorbances successifs relevés pour ce produit ;
- un moyen pour comparer cette différence à une consigne déterminée (correspondant plus particulièrement à la répétabilité du dispositif) ;
- un moyen pour détecter, pour le produit, l'achèvement d'une transition entre le premier composé et le deuxième composé lorsque cette différence est inférieure ou égale à cette valeur de consigne.

Un dispositif non couvert par les revendications concerne, encore, un dispositif de détermination de la composition d'un produit, circulant à l'intérieur d'une conduite d'acheminement de ce produit, et susceptible de contenir un premier composé et/ou un deuxième composé.

Ce dispositif de détermination de la composition est constitué par un dispositif de caractérisation présentant les caractéristiques décrites ci-dessus et dans lequel les moyens pour caractériser un produit comportent un moyen pour calculer le taux (plus particulièrement le pourcentage, notamment en volume) du premier composé et/ou du deuxième composé à l'intérieur de ce produit, ceci à partir, d'une part, des première et deuxième boîtes spectrales d'au moins un marqueur spectral et, d'autre part, de la valeur d'au moins un tel marqueur spectral du produit et correspondant au spectre d'absorbances relevé pour le produit.

Là encore, les moyens pour caractériser ledit produit sont constitués par un logiciel implanté dans un ordinateur que comporte le dispositif de caractérisation selon l'invention.

## Revendications

1. Procédé de détection de la transition, entre un premier composé et un deuxième composé, d'un produit, susceptible de contenir un tel premier composé et/ou un tel deuxième composé, et circulant à l'intérieur d'une conduite d'acheminement de ce produit, **caractérisé par le fait que** :
- on relève un spectre d'absorbances pour chaque échantillon d'une pluralité d'échantillons du premier composé pur ainsi que pour chaque échantillon d'une pluralité d'échantillons du deuxième composé pur ;
- à partir des spectres d' absorbances relevés pour les échantillons des premier et deuxième composés purs, on détermine, par analyse statistique des spectres d'absorbances en effectuant, soit une analyse factorielle discriminante, soit une analyse en composantes principales de ces spectres d'absorbances, au moins trois marqueurs spectraux, communs au premier composé et au deuxième composé, discriminants pour ces premier et deuxième composés, et constitués chacun par une fonction d'une pluralité d'absorbances d'un tel spectre sans recourir à une caractérisation basée uniquement sur des propriétés physiques relatives aux composés;
- à partir des spectres d' absorbances relevés pour les échantillons des premier et deuxième composés purs, on définit d'une part, une première boîte spectrale constituée par une première zone spectrale délimitée par des valeurs d'au moins ces trois marqueurs spectraux déterminés et correspondant au premier composé pur et, d'autre part, une deuxième boîte spectrale constituée par une deuxième zone spectrale délimitée par des valeurs d'au moins ces trois marqueurs spectraux déterminés et correspondant au deuxième composé pur, ceci au moins pour ces trois marqueurs spectraux préalablement déterminés et dans un espace correspondant à ces marqueurs spectraux ;
- à l'intérieur de la conduite d'acheminement du produit, on procède au relevé d'au moins un spectre d' absorbances de ce produit circulant à l'intérieur de cette conduite;
- pour au moins un tel spectre d' absorbances relevé pour le produit circulant à l'intérieur de la conduite, on détermine la valeur d'au moins trois marqueurs spectraux correspondant à au moins ces trois marqueurs spectraux préalablement déterminés pour les premier et deuxième composés purs ;
- sur un graphique, on représente les boites spectrales correspondant à au moins un des trois marqueurs spectraux, de préférence au moins les trois marqueurs spectraux, ceci pour les premier et deuxième composés purs ;
- sur ce même graphique, on visualise la valeur du ou des marqueurs spectraux déterminés et correspondant à au moins un spectre d' absorbances relevé pour le produit circulant à l'intérieur de la conduite d'acheminement ;
- on détecte, pour ce produit, la transition entre le premier composé et le deuxième composé lorsqu'on observe que la valeur du ou des marqueurs spectraux déterminés et correspondant à ce produit s'éloigne de la première boite spectrale et/ou s'approche de la deuxième boite spectrale, voire correspond à cette deuxième boite spectrale .

2. Procédé de détection de la transition d'un produit selon la revendication 1, **caractérisé par le fait que**
- sur un graphique, on représente les boites spectrales correspondant aux trois marqueurs spectraux préalablement déterminés pour les premier et deuxième composés purs;
- sur ce même graphique, on visualise la valeur des trois marqueurs spectraux déterminés et correspondant à au moins un spectre d'absorbances relevé pour le produit circulant à l'intérieur de la conduite d'acheminement ;
- on détecte, pour ce produit, la transition entre le premier composé et le deuxième composé lorsqu'on observe que la valeur des trois marqueurs spectraux déterminés et correspondant à ce produit s'éloigne de la première boite spectrale et/ou s'approche de la deuxième boite spectrale, voire correspond à cette deuxième boite spectrale.

3. Procédé de détection de la transition d'un produit selon la revendication 1, **caractérisé par le fait que** :
- à l'intérieur de la conduite d'acheminement du produit, on procède à une succession de relevés d'un spectre d'absorbances de ce produit circulant à l'intérieur de cette conduite ;
- pour chacun des spectres d'absorbances relevés pour le produit circulant à l'intérieur de la conduite, on détermine la valeur d'au moins un marqueur spectral correspondant à au moins un des trois marqueurs spectraux préalablement déterminés pour les premier et deuxième composés purs.

4. Procédé de détection de la transition d'un produit selon la revendication 3, **caractérisé par le fait qu'**on détecte, pour le produit, l'achèvement d'une transition entre le premier composé et le deuxième composé lorsque, après que la valeur du ou des marqueurs spectraux correspondant à des spectres d'absorbances relevés pour un produit circulant dans une conduite d'acheminement ait évolué entre la première et la deuxième boîte spectrale, la différence entre les valeurs du ou des marqueurs spectraux correspondant à au moins deux spectres d'absorbances successifs relevés pour ce produit est inférieure ou égal à une consigne déterminée.

5. Procédé de détection de la transition d'un produit selon l'une quelconque des revendications précédentes, **caractérisé par le fait qu'**on relève les spectres d'absorbances par spectroscopie Raman, en RMN, dans le domaine de l'infrarouge, de l'UV-visible ou du proche infrarouge.

6. Procédé de détection de la transition d'un produit selon l'une quelconque des revendications précédentes, **caractérisé par le fait que**, lorsqu'on détermine au moins un marqueur spectral :
- on identifie une pluralité d'absorbances pertinentes qui permettent de caractériser les premier et deuxième composés purs, ceci à partir des spectres d'absorbances relevés pour chaque échantillon d'une pluralité d'échantillons du premier composé pur ainsi que pour chaque échantillon d'une pluralité d'échantillons du deuxième composé pur ;
- on bâtit au moins un marqueur spectral à partir d' une pluralité d'absorbances pertinentes identifiées ;
- on valide au moins un tel marqueur spectral bâti.

7. Procédé de détection de la transition d'un produit selon la revendication 6, **caractérisé par le fait que**, lorsqu'on identifie une pluralité d'absorbances pertinentes, on procède à une analyse statistique des spectres relevés pour chaque échantillon d'une pluralité d'échantillons du premier composé pur ainsi que pour chaque échantillon d'une pluralité d'échantillons du deuxième composé pur.

8. Procédé de détection de la transition d'un produit selon la revendication 6, **caractérisé par le fait qu'**à partir des absorbances pertinentes identifiées, on bâtit au moins un marqueur spectral en construisant une fonction d'une pluralité de ces absorbances pertinentes constituée par un ratio d'absorbances, par une combinaison d'absorbances, par un ratio de combinaisons d'absorbances ou autre.

9. Procédé de détection de la transition d'un produit selon la revendication 6, **caractérisé par le fait que**, lorsqu'on valide au moins un marqueur spectral, on détermine si les premier et deuxième composés sont discriminés pour au moins un tel marqueur spectral.

10. Dispositif de détection de la transition d'un produit, circulant à l'intérieur d'une conduite d'acheminement de ce produit, et susceptible de contenir un premier composé et/ou un deuxième composé, ce dispositif étant conçu pour mettre en œuvre le procédé selon l'une quelconque des revendications 1 à 9 et **caractérisé par le fait qu'**il comporte :
- une base de données contenant au moins les spectres d'absorbances d'une pluralité d'échantillons du premier composé pur et d'une pluralité d'échantillons du deuxième composé pur ;
- des moyens pour déterminer au moins trois marqueurs spectraux, communs au premier composé et au deuxième composé, discriminants pour ces premier et deuxième composés, et constitués par une fonction d'une pluralité d' absorbances d'un tel spectre ;
- des moyens pour définir, d'une part, une première boîte spectrale constituée par une première zone spectrale délimitée par des valeurs d'au moins ces trois marqueurs spectraux déterminés et correspondant au premier composé pur et, d' autre part, une deuxième boîte spectrale constituée par une deuxième zone spectrale délimitée par des valeurs d'au moins ces trois marqueurs spectraux déterminés et correspondant au deuxième composé pur, ceci pour au moins les trois marqueurs spectraux préalablement déterminés et dans un espace correspondant à ces marqueurs spectraux ;
- des moyens pour relever, à l'intérieur de la conduite d'acheminement du produit, au moins un spectre d' absorbances de ce produit circulant à l'intérieur de cette conduite ;
- des moyens pour déterminer la valeur des trois marqueurs spectraux correspondant aux trois marqueurs spectraux préalablement déterminés pour les premier et deuxième composés purs, ceci pour au moins un spectre d' absorbances relevé pour le produit circulant à l'intérieur de la conduite ;
- des moyens pour caractériser ledit produit, ceci en fonction, d'une part, des première et deuxième boîtes spectrales et, d'autre part, de la valeur d'au moins un marqueur spectral déterminé, de préférence au moins les trois marqueurs spectraux déterminés, et correspondant à au moins un spectre d' absorbances relevé pour le produit, ces moyens pour caractériser ledit produit comportant :
- un moyen pour représenter, sur un graphique, les boites spectrales correspondant à au moins un marqueur spectral, ceci pour les premier et deuxième composés purs ;
- un moyen pour visualiser, sur ce même graphique, la valeur du ou des marqueurs spectraux déterminés et correspondant à au moins un spectre d' absorbances relevé pour le produit circulant à l'intérieur de la conduite d'acheminement.

11. Dispositif de détection de la transition d'un produit selon la revendication 10, **caractérisé par le fait que** ce dispositif comporte :
- un moyen pour calculer la différence entre les valeurs du ou des marqueurs spectraux correspondant à au moins deux spectres d'absorbances successifs relevés pour ce produit ;
- un moyen pour comparer cette différence à une consigne déterminée ;
- un moyen pour détecter, pour le produit, l'achèvement d'une transition entre le premier composé et le deuxième composé lorsque cette différence est inférieure ou égale à cette valeur de consigne.

12. Dispositif de détection de la transition d'un produit selon l'une quelconque des revendications 10 ou 11, **caractérisé par le fait que** les moyens pour déterminer au moins un marqueur spectral comportent, d'une part, des moyens pour identifier une pluralité d'absorbances pertinentes qui permettent de caractériser les premier et deuxième composés purs et, d'autre part, un moyen pour bâtir au moins un marqueur spectral à partir d'une pluralité d' absorbances pertinentes et constitué par une fonction d'une pluralité de ces absorbances pertinentes identifiées.

13. Dispositif de détection de la transition d'un produit selon l'une quelconque des revendications 10 à 12, **caractérisé par le fait que** les moyens pour relever au moins un spectre d'absorbances du produit est constitué par un spectromètre de type Raman, RMN, en infrarouge, en UV-visible ou en proche infrarouge et comportant une sonde introduite à l'intérieur de la conduite d'acheminement.

## Patentansprüche

1. Verfahren zum Erkennen des Übergangs, zwischen einer ersten Verbindung und einer zweiten Verbindung, eines Produkts, das möglicherweise eine solche erste Verbindung und/oder eine solche zweite Verbindung enthält und im Inneren einer Förderleitung dieses Produkts zirkuliert, **dadurch gekennzeichnet, dass**:
- ein Absorptionsspektrum für jede Probe einer Vielzahl von Proben der ersten reinen Verbindung sowie für jede Probe einer Vielzahl von Proben der zweiten reinen Verbindung aufgezeichnet wird;
- ausgehend von Absorptionsspektren, die für die Proben der ersten und der zweiten reinen Verbindung aufgezeichnet werden, mittels statistischer Analyse der Absorptionsspektren durch Durchführen entweder einer faktoriellen Diskriminanzanalyse oder einer Hauptkomponentenanalyse dieser Absorptionsspektren mindestens drei Spektralmarker bestimmt werden, welche die erste Verbindung und die zweite Verbindung gemeinsam haben, sich bei dieser ersten und zweiten Verbindung unterscheiden und jeweils in Abhängigkeit einer Vielzahl von Absorptionswerten eines solchen Spektrums gebildet sind, ohne auf eine lediglich auf physikalischen Eigenschaften in Bezug auf die Verbindungen beruhende Charakterisierung zurückzugreifen;
- ausgehend von Absorptionsspektren, die für die Proben der ersten und der zweiten reinen Verbindung aufgezeichnet werden, einerseits ein erster Spektralkasten, der durch eine erste Spektralzone gebildet ist, die durch Werte von mindestens diesen drei bestimmten und der ersten reinen Verbindung entsprechenden Spektralmarkern begrenzt ist, und andererseits ein zweiter Spektralkasten, der durch eine zweite Spektralzone gebildet ist, die durch Werte von mindestens diesen drei bestimmten und der zweiten reinen Verbindung entsprechenden Spektralmarkern begrenzt ist, definiert werden, wobei dies für mindestens diese drei zuvor bestimmten Spektralmarker und in einem diesen Spektralmarkern entsprechenden Raum erfolgt;
- im Inneren der Förderleitung des Produkts mindestens ein Absorptionsspektrum dieses im Inneren dieser Leitung zirkulierenden Produkts aufgezeichnet wird;
- für mindestens ein solches für das im Inneren der Leitung zirkulierende Produkt aufgezeichnetes Absorptionsspektrum der Wert von mindestens drei Spektralmarkern bestimmt wird, die mindestens diesen drei zuvor für die erste und die zweite reine Verbindung bestimmten Spektralmarkern entsprechen;
- in einem Diagramm die Spektralkästen dargestellt werden, die mindestens einem der drei Spektralmarker, bevorzugt mindestens den drei Spektralmarkern, entsprechen, wobei dies für die erste und die zweite reine Verbindung erfolgt;
- in demselben Diagramm der Wert des oder der bestimmten und mindestens einem für das im Inneren der Förderleitung zirkulierende Produkt aufgezeichneten Absorptionsspektrum entsprechenden Spektralmarker visualisiert wird;
- für dieses Produkt der Übergang zwischen der ersten Verbindung und der zweiten Verbindung erkannt wird, wenn festgestellt wird, dass sich der Wert des oder der bestimmten und diesem Produkt entsprechenden Spektralmarker von dem ersten Spektralkasten entfernt und/oder sich dem zweiten Spektralkasten annähert oder sogar diesem zweiten Spektralkasten entspricht.

2. Verfahren zum Erkennen des Übergangs eines Produkts nach Anspruch 1, **dadurch gekennzeichnet, dass**
- in einem Diagramm die Spektralkästen dargestellt werden, die den drei zuvor für die erste und die zweite reine Verbindung bestimmten Spektralmarkern entsprechen;
- in demselben Diagramm der Wert der drei bestimmten und mindesten einem für das im Inneren der Förderleitung zirkulierende Produkt aufgezeichneten Absorptionsspektrum entsprechenden Spektralmarkern visualisiert wird;
- für dieses Produkt der Übergang zwischen der ersten Verbindung und der zweiten Verbindung erkannt wird, wenn festgestellt wird, dass sich der Wert der drei bestimmten und diesem Produkt entsprechenden Spektralmarker von dem ersten Spektralkasten entfernt und/oder sich dem zweiten Spektralkasten annähert oder sogar diesem zweiten Spektralkasten entspricht.

3. Verfahren zum Erkennen des Übergangs eines Produkts nach Anspruch 1, **dadurch gekennzeichnet, dass**:
- im Inneren der Förderleitung des Produkts eine Abfolge von Aufzeichnungen eines Absorptionsspektrums dieses im Inneren dieser Leitung zirkulierenden Produkts durchgeführt wird;
- für jedes der für das im Inneren der Leitung zirkulierende Produkt aufgezeichneten Absorptionsspektren der Wert mindestens eines Spektralmarkers bestimmt wird, der mindestens einem der drei zuvor für die erste und die zweite reine Verbindung bestimmten Spektralmarker entspricht.

4. Verfahren zum Erkennen des Übergangs eines Produkts nach Anspruch 3, **dadurch gekennzeichnet, dass** für das Produkt der Abschluss eines Übergangs zwischen der ersten Verbindung und der zweiten Verbindung erkannt wird, wenn, nachdem sich der Wert des oder der für ein in einer Förderleitung zirkulierendes Produkt aufgezeichneten Absorptionsspektren entsprechenden Spektralmarker zwischen dem ersten und dem zweiten Spektralkasten entwickelt hat, die Differenz zwischen den Werten des oder der mindestens zwei aufeinanderfolgend für dieses Produkt aufgezeichneten Absorptionsspektren entsprechenden Spektralmarker kleiner oder gleich einem bestimmten Sollwert ist.

5. Verfahren zum Erkennen des Übergangs eines Produkts nach einem der vorhergehenden Ansprüche, **dadurch gekennzeichnet, dass** die Absorptionsspektren mittels Raman-, NMR-, Infrarot-, UV/VIS- oder Nahinfrarot-Spektroskopie aufgezeichnet werden.

6. Verfahren zum Erkennen des Übergangs eines Produkts nach einem der vorhergehenden Ansprüche, **dadurch gekennzeichnet, dass** beim Bestimmen mindestens eines Spektralmarkers:
- eine Vielzahl von relevanten Absorptionswerten identifiziert wird, die es ermöglicht, die erste und die zweite reine Verbindung zu charakterisieren, wobei dies ausgehend von für jede Probe einer Vielzahl von Proben der ersten reinen Verbindung sowie für jede Probe einer Vielzahl von Proben der zweiten reinen Verbindung aufgezeichneten Absorptionsspektren erfolgt;
- mindestens ein Spektralmarker ausgehend von einer identifizierten Vielzahl von relevanten Absorptionswerten erzeugt wird;
- mindestens ein solcher erzeugter Spektralmarker validiert wird.

7. Verfahren zum Erkennen des Übergangs eines Produkts nach Anspruch 6, **dadurch gekennzeichnet, dass** beim Identifizieren einer Vielzahl von relevanten Absorptionswerten eine statistische Analyse von für jede Probe einer Vielzahl von Proben der ersten reinen Verbindung sowie für jede Probe einer Vielzahl von Proben der zweiten reinen Verbindung aufgezeichneten Spektren durchgeführt wird.

8. Verfahren zum Erkennen des Übergangs eines Produkts nach Anspruch 6, **dadurch gekennzeichnet, dass** ausgehend von identifizierten relevanten Absorptionswerten mindestens ein Spektralmarker erzeugt wird, indem eine Funktion einer Vielzahl dieser relevanten Absorptionswerte erstellt wird, die durch ein Verhältnis von Absorptionswerten, durch eine Kombination von Absorptionswerten, durch ein Verhältnis von Kombinationen von Absorptionswerten oder dergleichen gebildet wird.

9. Verfahren zum Erkennen des Übergangs eines Produkts nach Anspruch 6, **dadurch gekennzeichnet, dass** beim Validieren mindestens eines Spektralmarkers bestimmt wird, ob sich die erste und die zweite Verbindung durch mindestens einen solchen Spektralmarker unterscheiden.

10. Vorrichtung zum Erkennen des Übergangs eines Produkts, das im Inneren einer Förderleitung dieses Produkts zirkuliert und möglicherweise eine erste Verbindung und/oder eine zweite Verbindung enthält, wobei diese Vorrichtung dazu ausgelegt ist, das Verfahren nach einem der Ansprüche 1 bis 9 umzusetzen, und **dadurch gekennzeichnet ist, dass** sie Folgendes beinhaltet:
- eine Datenbank, die mindestens die Absorptionsspektren einer Vielzahl von Proben der ersten reinen Verbindung und einer Vielzahl von Proben der zweiten reinen Verbindung enthält;
- Mittel zum Bestimmen von mindestens drei Spektralmarkern, welche die erste Verbindung und die zweite Verbindung gemeinsam haben, sich bei dieser ersten und zweiten Verbindung unterscheiden und jeweils in Abhängigkeit einer Vielzahl von Absorptionswerten eines solchen Spektrums gebildet sind;
- Mittel zum Definieren einerseits eines ersten Spektralkastens, der durch eine erste Spektralzone gebildet ist, die durch Werte von mindestens diesen drei bestimmten und der ersten reinen Verbindung entsprechenden Spektralmarkern begrenzt ist, und andererseits eines zweiten Spektralkastens, der durch eine zweite Spektralzone gebildet ist, die durch Werte von mindestens diesen drei bestimmten und der zweiten reinen Verbindung entsprechenden Spektralmarkern begrenzt ist, wobei dies für mindestens die drei zuvor bestimmten Spektralmarker und in einem diesen Spektralmarkern entsprechenden Raum erfolgt;
- Mittel zum Aufzeichnen, im Inneren der Förderleitung des Produkts, mindestens eines Absorptionsspektrums dieses im Inneren dieser Leitung zirkulierenden Produkts;
- Mittel zum Bestimmen des Werts von drei Spektralmarkern, die drei zuvor für die erste und die zweite reine Verbindung bestimmten Spektralmarkern entsprechen, wobei dies für mindestens ein für das im Inneren der Leitung zirkulierende Produkt aufgezeichnetes Absorptionsspektrum erfolgt;
- Mittel zum Charakterisieren des Produkts, wobei dies einerseits in Abhängigkeit von einem ersten und einem zweiten Spektralkasten und andererseits des Werts mindestens eines bestimmten Spektralmarkers, bevorzugt mindestens der drei bestimmten Spektralmarker, und entsprechend mindestens einem für das Produkt aufgezeichneten Absorptionsspektrum erfolgt, wobei diese Mittel zum Charakterisieren des Produkts Folgendes beinhalten:
- ein Mittel zum Darstellen, in einem Diagramm, der mindestens einem Spektralmarker entsprechenden Spektralkästen, wobei dies für die erste und die zweite reine Verbindung erfolgt;
- ein Mittel zum Visualisieren, in demselben Diagramm, des Werts des oder der bestimmten und mindestens einem für das im Inneren der Förderleitung zirkulierende Produkt aufgezeichneten Absorptionsspektrum entsprechenden Spektralmarker.

11. Vorrichtung zum Erkennen des Übergangs eines Produkts nach Anspruch 10, **dadurch gekennzeichnet, dass** diese Vorrichtung Folgendes beinhaltet:
- ein Mittel zum Berechnen der Differenz zwischen den Werten des oder der mindestens zwei aufeinanderfolgend für dieses Produkt aufgezeichneten Absorptionsspektren entsprechenden Spektralmarker;
- ein Mittel zum Vergleichen dieser Differenz mit einem bestimmten Sollwert;
- ein Mittel zum Erkennen, für das Produkt, des Abschlusses eines Übergangs zwischen der ersten Verbindung und der zweiten Verbindung, wenn diese Differenz kleiner oder gleich diesem Sollwert ist.

12. Vorrichtung zum Erkennen des Übergangs eines Produkts nach einem der Ansprüche 10 oder 11, **dadurch gekennzeichnet, dass** die Mittel zum Bestimmen mindestens eines Spektralmarkers einerseits Mittel zum Identifizieren einer Vielzahl von relevanten Absorptionswerten, die es ermöglicht, die erste und zweite reine Verbindung zu charakterisieren, und andererseits ein Mittel zum Erzeugen mindestens eines Spektralmarkers ausgehend von einer Vielzahl von relevanten Absorptionswerten, der in Abhängigkeit einer identifizierten Vielzahl dieser relevanten Absorptionswerte gebildet ist, beinhalten.

13. Vorrichtung zum Erkennen des Übergangs eines Produkts nach einem der Ansprüche 10 bis 12, **dadurch gekennzeichnet, dass** die Mittel zum Aufzeichnen mindestens eines Absorptionsspektrums des Produkts durch ein Spektrometer vom Typ Raman, NMR, Infrarot, UV/VIS oder Nahinfrarot gebildet ist und eine Sonde beinhaltet, die in das Innere der Förderleitung eingeführt wird.

## Claims

1. Method of detecting the transition, between a first compound and a second compound, of a product, which may contain such a first compound and/or such a second compound, and which circulates inside a conduit for conveying this product, **characterised by** the fact that:
- an absorption spectrum is recorded for each sample of a plurality of samples of the first pure compound and for each sample of a plurality of samples of the second pure compound;
- from the absorption spectra recorded for the samples of the first and second pure compounds, at least three spectral markers, common to the first compound and to the second compound, discriminating for these first and second compounds, and each constituted by a function of a plurality of absorptions of such a spectrum, are determined by statistical analysis of the absorption spectra by carrying out either a discriminant factorial analysis or a principal component analysis of these absorption spectra, without resorting to a characterisation based solely on physical properties relating to the compounds;
- from the absorption spectra recorded for the samples of the first and second pure compounds, it is defined, on the one hand, a first spectral box made up of a first spectral zone delimited by values of at least these three determined spectral markers, and corresponding to the first pure component, and on the other hand, a second spectral box made up of a second spectral zone delimited by values of at least these three spectral markers, which were determined and that correspond to the second pure compound, at least for those three previously determined spectral markers and in a space corresponding to those spectral markers;
- inside the conduit for conveyance of the product, at least one absorbance spectrum of this product circulating inside this conduit is recorded;
- for at least one such absorption spectrum recorded for the product circulating inside the conduit, the value of at least three spectral markers corresponding to at least these three spectral markers previously determined for the first and second pure compounds is determined;
- on a graph, the spectral boxes corresponding to at least one of the three spectral markers are represented, preferably at least the three spectral markers, for the first and second pure compounds;
- on the same graph, the value of the spectral marker (s) determined and corresponding to at least one absorption spectrum recorded for the product circulating inside the conduit for conveyance is displayed;
- the transition between the first compound and the second compound is detected for this product when the value of the spectral marker(s) determined and corresponding to this product moves away from the first spectral box and/or approaches the second spectral box, or even corresponds to this second spectral box.

2. Method for detecting the transition of a product according to claim 1, **characterised by** the fact that
- on a graph, spectral boxes are shown that correspond to the three spectral markers previously determined for the first and second pure compounds;
- on the same graph, the value of the three spectral markers determined and corresponding to at least one absorption spectrum recorded for the product circulating inside the conduit for conveyance is displayed;
- the transition between the first compound and the second compound is detected for this product when it is observed that the value of the three spectral markers determined and corresponding to this product moves away from the first spectral box and/or approaches the second spectral box, or even corresponds to this second spectral box.

3. A method to detect the transition of a product according to claim 1, **characterised by** the fact that:
- inside the conduit for conveyance of the product, a succession of readings of an absorption spectrum of this product circulating inside this conduit is performed;
- for each of the absorption spectra recorded for the product circulating inside the conduit, the value of at least one spectral marker corresponding to at least one of the three spectral markers previously determined for the first and second pure compounds is determined.

4. Method of detection of the transition of a product according to claim 3, **characterised by** the fact that that the completion of a transition may be detected in the product between the first compound and the second compound when, after the value of the spectral marker(s) corresponding to the absorption spectra recorded for a product circulating in a conduit for conveyance has evolved between the first and second spectral box, the difference between the values of the spectral marker(s) corresponding to at least two successive absorption spectra recorded for this product is lower or equal to a determined reference point.

5. Method of detection of the transition of a product according to any of the foregoing claims, **characterised by** the fact that the absorption spectra are recorded by Raman spectroscopy, NMR, in the field of infrared, visible-UV, or near infrared.

6. Method of detection of the transition of a product according to any of the foregoing claims, **characterised by** the fact that, when at least one spectral marker is determined:
- a plurality of relevant absorbencies is identified that make it possible to characterise the first and second pure compounds, from the absorption spectra recorded for each sample of a plurality of samples from the first pure compound as well as for each sample of a plurality of samples from the second pure compound;
- at least one spectral marker is built from a plurality of relevant absorbencies identified;
- at least one such built spectral marker is validated.

7. Method of detection of the transition of a product according to claim 6, **characterised by** the fact that when a plurality of relevant absorbencies has been identified, a statistical analysis is made of the spectra recorded for each sample from a plurality of samples from the first pure compound as well as for each sample of a plurality of samples from the second pure compound.

8. Method of detection of the transition of a product according to claim 6, **characterised by** the fact that from the relevant absorbencies identified, at least one spectral marker is built by building a function from a plurality of these relevant absorbencies constituted by an absorption ratio, by a combination of absorbencies, by a ratio of combinations of absorbencies, or otherwise.

9. Method of detection of the transition of a product according to claim 6, **characterised by** the fact that, when at least one spectral marker is validated, one determines whether the first and second compounds are discriminated for at least one such spectral marker.

10. Device for the detection of the transition of a product, circulating inside a conduit for conveyance of this product, and which may contain a first compound and/or a second compound, this device being designed to implement the method according to any of claims 1 to 9 and **characterised by** the fact that it comprises:
- a database containing at least the absorption spectra from a plurality of samples from the first pure compound and from a plurality of samples from the second pure compound;
- means for determining at least three spectral markers, common to the first compound and the second compound, discriminating for these first and second compounds, and constituted by a function of a plurality of absorbencies of such a spectrum;
- means for defining, on the one hand, a first spectral box constituted by a first spectral zone delimited by values of at least these three determined spectral markers and corresponding to the first pure compound and, on the other hand, a second spectral box constituted by a second spectral zone delimited by values of at least these three determined spectral markers and corresponding to the second pure compound, for at least the three previously determined spectral markers and in a space corresponding to these spectral markers;
- means for recording, inside the conduit for conveyance of the product, at least one absorption spectrum of this product circulating on the inside of this conduit;
- means for determining the value of the three spectral markers corresponding to the three spectral markers previously determined for the first and second pure compounds, for at least one absorption spectrum recorded for the product circulating on the inside of the conduit;
- the means to characterise said product, on the one hand, based on the first and second spectral boxes and, on the other hand, from the value of at least at least one determined spectral marker, preferably at least the three determined spectral markers, and corresponding to at least one absorption spectrum recorded for the product, these means for characterising said product comprising:
- a means to represent, on a graph, the spectral boxes corresponding to at least one spectral marker for the first and second pure compounds;
- a means to display, on the same graph, the value of the determined spectral marker(s) and corresponding to at least one absorption spectrum recorded for the product circulating within the conduit for conveyance.

11. Device for the detection of the transition of a product according to claim 10, **characterised by** the fact that the device comprises:
- a means for calculating the difference between the values of the spectral marker(s) corresponding to at least two successive absorption spectra recorded for that product;
- a means to compare this difference to a determined reference point;
- a means to detect, for the product, the completion of a transition between the first compound and the second compound when this difference is less than or equal to this reference value.

12. Device for the detection of the transition of a product according to any of claims 10 or 11, **characterised by** the fact that the means to determine at least one spectral marker comprising, on the one hand, means to identify a plurality of relevant absorbencies to make it possible to characterize the first and second pure compounds and, on the other hand, a means to build at least one spectral marker from a plurality of relevant absorbencies and constituted by a function of a plurality of these recorded relevant absorbencies.

13. Device for the detection of the transition of a product according to any of claims 10 to 12, **characterised by** the fact that the means to identify at least one absorption spectrum of the product is constituted by a spectrometer of the Raman, NMR, infrared, visible-UV, or near infrared type and comprising a probe inserted into the conduit for conveyance.
